(19) Europäisches Patentamt
European Patent Office
Office européen des brevets

(11) **EP 3 103 852 B1**

(12) **EUROPEAN PATENT SPECIFICATION**

(45) Date of publication and mention of the grant of the patent:
**25.12.2019 Bulletin 2019/52**

(51) Int Cl.:
***C09K 8/54*** *(2006.01)* ***C09K 8/035*** *(2006.01)*
***C23F 11/00*** *(2006.01)*

(21) Application number: **16173603.8**

(22) Date of filing: **08.06.2016**

(54) **NON-CORROSIVE FOAMING COMPOSITION**

NICHTKORROSIVE SCHÄUMENDE ZUSAMMENSETZUNG

COMPOSITION MOUSSANTE NON CORROSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2015 GB 201510151**

(43) Date of publication of application:
**14.12.2016 Bulletin 2016/50**

(73) Proprietor: **Ecolab USA Inc.**
**St. Paul, MN 55102 (US)**

(72) Inventors:
- **SCOTT CAIRD, Brian**
**Oldmeldrum (GB)**
- **DONALDSON, David**
**Aberdeen**
**AB15 5LN (GB)**
- **OUDE HEUVEL, Steven Kristian**
**7491 MC Delden (NL)**

(74) Representative: **HGF Limited**
**Delta House**
**50 West Nile Street**
**Glasgow G1 2NP (GB)**

(56) References cited:
**WO-A1-2009/064719**
**CN-A- 103 409 122**
**CN-A- 103 614 129**
**CN-A- 103 881 697**
**CN-A- 104 911 621**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to the field of non-corrosive foaming compositions, more specifically to non-corrosive foaming compositions for use in natural gas wells and methods of using the same.

## Background of the Invention

In natural gas wells, the rate of gas production decreases as the pressure of the reservoir of gas decreases. This decrease in pressure typically arises due to the reduction in the amount of gas within the well, which results in a reduction in the amount of liquid removed from the well. Accordingly, liquid may build up within the well, such as water and condensate. As the amount of liquid increases, the gas to liquid ratio decreases, reducing flow velocity and increasing hydrostatic pressure within the well bore. This rise in hydrostatic pressure reduces gas production, and therefore, there is a need to reduce the effects of so-called liquid loading, thereby increasing the efficiency of recovery of natural gas from the wells.

One solution that is used to reduce the effects of liquid loading is to introduce a foaming agent, such as a surfactant, for example, into the gas well to foam the liquid within the well to allow the liquid to be unloaded from the well at a lower energy cost than for removing liquid when not in the form of a foam. Such foaming agents are often introduced into gas wells by injection through injection lines, or flow lines.

However, when such surfactants are provided in a concentrated form, to ensure that the concentration of surfactant when diluted within the liquid in the gas well is still sufficient to foam the liquid, they are often corrosive and may corrode the injection lines of the gas well.

Therefore, there is a need for improved foaming compositions for use in gas wells with reduced corrosion of the injection lines of the gas wells by concentrated foaming compositions.

Typically, gas wells comprise metallic components and these components may be corroded by the combination of conditions found within the gas well. For example, the combination of carbon dioxide, water and salt, can corrode the metals and alloys used in the structure of the gas well. Therefore, it is important to inject corrosion inhibitors into the well to prevent this corrosion, and to thereby increase the lifetime of the components of the gas well. Accordingly, gas wells often use one line to feed the corrosion inhibitor into the gas well, and a further line to feed any other agent into the gas well. Examples of compositions are described in international patent application no. WO 2009/064719 to Nalco Company that describes imidazoline-based heterocyclic foamers, Chinese patent application no. CN 103614129 to Chendu Huayangxinghua Chemical Co Ltd that describes corrosion inhibitor foam discharging agents, Chinese patent application no. CN 103881697 to Hangzhou Core Power Tech Company that describes imidazoline compound corrosion inhibitors, and Chinese patent application no. CN 103409122 to CNPC Chuanqing Drilling Eng. Company that describes water-soluble corrosion inhibitors. Therefore, when liquid builds up within a gas well, multiple lines are required to feed the various agents into the gas well, including corrosion inhibitors and foaming agents, increasing the cost of gas production. Therefore, there is a need to reduce the number of lines required in a gas well within which liquid has built up.

Accordingly, it is an object of the present invention to provide improved compositions for use in gas well applications.

## Statements of the Invention

According to a first aspect of the invention, there is provided a composition according to the appended claims. The composition comprises at least one betaine, at least one imidazoline, and at least one molybdate salt, wherein the composition has a chloride concentration of less than 2000ppm, wherein the at least one betaine has the general formula (1)

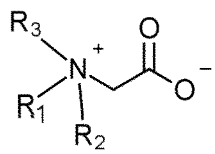

(1)

where $R_1$, $R_2$ are individually $C_1$-$C_3$ alkyl; and
$R_3$ has general formula (2)

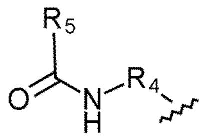

(2)

where $R_4$ is $C_1$-$C_5$ saturated hydrocarbon; and
$R_5$ is $C_1$-$C_{32}$ alkyl and
where the at least one imidazoline has general formula (3)

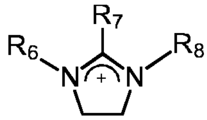

(3)

where $R_6$ is $C_2$-$C_8$ alkyl;
$R_7$ is a fatty acid derivative; and
$R_8$ is an unsaturated acid derivative.

Typically, foaming compositions and corrosion inhibitor compositions are typically injected into gas wells separately, and therefore, the two compositions are typically in the same solution only when diluted down in the liquid within a gas well.

If the two compositions are combined, typically, the combined composition is corrosive, and corrodes the line used to inject the composition into the well over time, but the combined composition is typically a corrosion inhibitor at the diluted concentrations within the well.

For example, whilst imidazolines have been shown to be corrosion inhibitors for mild steel, it has not been possible to provide an imidazoline corrosion inhibitor composition that is also a foaming agent, and that is itself non-corrosive in the concentrated form.

Surprisingly, the inventors have found that a composition according to the present invention acts as a foaming agent and as a corrosion inhibitor within the gas well. Furthermore, the composition has been found to be non-corrosive both in dilute and concentrated forms, and therefore will substantially not corrode the injection or flow lines through which the composition is introduced into the gas well. Accordingly, the composition of the present invention allows a single line to inject both a foaming agent and a corrosion inhibitor into the well, and to substantially prevent corrosion of the line by the foaming agent and corrosion inhibitor, thereby reducing the frequency with which the injection or flow line needs to be replaced, and accordingly reducing costs and increasing efficiency.

Typically, the composition has a chloride concentration of less than 1000ppm. Preferably, the composition has a chloride concentration of less than 500ppm. More preferably, the composition is substantially free of chloride. For example, the composition may comprise less than 5ppm chloride, or less than 1ppm chloride.

$R_4$ is a bridging group between the nitrogen of $R_3$ and the nitrogen of general formula (1). Accordingly, the $R_4$ is a double radical moiety. For example, in embodiments where $R_4$ is $C_3$ saturated hydrocarbon, $R_4$ may be represented as $\cdot CH_2CH_2CH_2\cdot$. Preferably, $R_4$ is $C_3$ saturated hydrocarbon (propyl), and so the betaine may be an alkyl amido propyl betaine.

$R_1$ and $R_2$ may individually be methyl, ethyl or propyl. Preferably, both $R_1$ and $R_2$ are methyl.

$R_5$ may be $C_8$-$C_{18}$ alkyl. Preferably, $R_5$ is $C_{10}$-$C_{14}$ alkyl. $R_5$ may be branched or straight chained.

In a preferred embodiment of the invention, $R_1$ and $R_2$ is methyl, $R_4$ is propyl, and $R_5$ is $C_3$-$C_{13}$ alkyl. Accordingly, the at least one betaine may be an alkylamidopropylbetaine.

In a further preferred embodiment of the invention, $R_1$ and $R_2$ are methyl, $R_4$ is propyl, and $R_5$ is $C_{10}$-$C_{14}$ alkyl. Suitably, in one embodiment of the invention $R_1$ and $R_2$ are methyl, $R_4$ is propyl, and $R_5$ is undecyl.

The person skilled in the art will appreciate that general formula (3) is the delocalised structure for imidazolines and the two Kekule structures are shown in general formula (4).

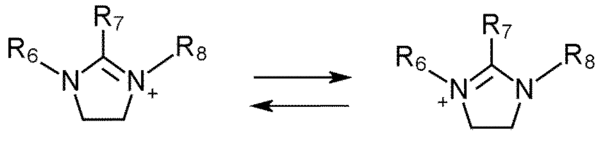

(4)

Suitable imidazolines that may be used in the composition of the invention include those disclosed in US 2004/0200996 in the name of Meyer.

Typically, $R_6$ is $C_3$-$C_6$ alkyl. For example, $R_6$ may be propyl, butyl, pentyl or hexyl. Preferably, $R_6$ is propyl.

Fatty acid derivatives typically include carboxylic acids with an aliphatic moiety. For example, fatty acid derivatives may include $C_4$-$C_{28}$ aliphatic carboxylic acids. The $C_4$-$C_{28}$ aliphatic moiety may be saturated or unsaturated. The $C_4$-$C_{28}$ aliphatic moiety may be straight chained or branched.

Accordingly, $R_7$ may be $C_4$-$C_{28}$ aliphatic carboxylic acid. Preferably, $R_7$ is a $C_{10}$-$C_{20}$ aliphatic carboxylic acid. More preferably, $R_7$ is $C_{13}$-$C_{20}$ aliphatic carboxylic acid. For example, $R_7$ may be a derivative of coconut oil, beef tallow or tall oil fatty acids (TOFA). The term "TOFA" as used herein is intended to define a tall oil fatty acid which is a distilled product derived from trees and which consists of a mixture of fatty acids, having the general formula $C_{17}$ $H_{31-35}$ COOH with a CAS No. 61790-12-3. It is a mixture of oleic acid as a major component, linoleic acid and saturated fatty acids. For purposes of this invention the radical obtained therefrom will be identified as heptadecenyl.

Most preferably, $R_7$ is heptadecenyl.

$R_8$ may be an unsaturated carboxylic acid derivative. $R_8$ may be a $C_3$-$C_{10}$ unsaturated carboxylic acid derivative. For example, in a preferred embodiment, $R_8$ is an acrylic acid derivative.

The term "acrylic acid derivative" as used herein refers to the acrylate moiety that is added to the imidazoline by the Michael addition of acrylic acid to the imidazoline. The addition of the acrylate moiety may increase the water solubility of the imidazoline.

In preferred embodiments of the invention, the imidazoline is selected from the group consisting of N-propyl-2-heptadecenyl imidazoline acrylate, N-butyl-2-heptadecenyl imidazoline acrylate and N-hexyl-2-heptadecenyl imidazoline acrylate. In most preferred embodiments, the imidazoline is N-propyl-2-heptadecenyl imidazoline acrylate.

The molybdate salt may comprise an alkali metal counter ion. For example, the molybdate salt may be lithium molybdate, sodium molybdate or potassium molybdate. Preferably, the molybdate salt is sodium molybdate.

The molybdate salt may be in an anhydrous form. Preferably, the molybdate salt is in a hydrated form i.e. the molybdate ion has formed a complex with at least one molecule of water on average. Preferably, the molybdate salt is a molybdate dihydrate, and as such the molybdate ion has formed a complex with two molecules of water on average.

For example, in preferred embodiments, the molybdate salt may be sodium molybdate dihydrate, $Na_2MbO_4.2H_2O$.

The inventors have surprisingly found that a composition comprising a molybdate salt has an increased corrosion inhibition over compositions known in the art.

In a preferred embodiment of the invention, the composition comprises laurylamidopropylbetaine, N-propyl-2-heptadecenyl imidazoline acrylate and sodium molybdate dehydrate.

Typically, the composition comprises a solvent. The solvent may be a polar solvent. For example, the solvent may be water, or a non-aqueous solvent such as an alcohol, a polyol, or a glycol ether, for example. The solvent may be a mixture of two or more solvents. The solvent may comprise water and a non-aqueous solvent. Preferably, the solvent may comprise water and a glycol ether. For example, the solvent may be a mixture of water and ethylene glycol ether.

In embodiments where the solvent comprises a glycol ether, the solvent may reduce the freezing point of the composition below that of water. Accordingly, the composition has a greater working temperature range within which the composition is a liquid, and therefore, may help to prevent the composition from freezing.

In typical applications of compositions used within gas wells, the composition is applied in a concentrated or neat form to be subsequently diluted in the predominantly aqueous liquid that may have built up at the bottom of the well. Accordingly, a concentrated form of the composition of the present invention may comprise less than 80 weight percent of solvent, less than 75 weight percent of solvent.

Preferably, the composition of the invention is substantially non-corrosive in the concentrated form. Accordingly, the composition of the invention may be injected or otherwise fed into a natural gas well, for example, in a concentrated form without substantially corroding the injectors or flow lines through which it passes. Therefore, a smaller volume of liquid is required to be added to the gas well, thereby reducing the final volume of liquid to be removed from the well.

The composition may comprise about 1 to about 99 weight percent of the at least one betaine, about 1 to about 20 weight percent of the at least one imidazoline, and about 0.1 to about 5.0 weight percent of the at least one molybdate salt, with the balance made up to 100 by solvent.

Preferably, the composition comprises about 10 to about 50 weight percent of the at least one betaine, about 3 to about 10 weight percent of the at least one imidazoline, and about 0.5 to about 2.0 weight percent of the at least one molybdate salt, with the balance made up to 100 by solvent.

More preferably, the composition comprises about 15 to about 25 weight percent of the at least one betaine, about 4 to about 6 weight percent of the at least one imidazoline, and about 0.5 to about 1.0 weight percent of the at least one molybdate salt, with the balance made up to 100 by solvent. For example, in one embodiment of the invention, the composition comprises about 21 weight percent of the at least one betaine, about 5 weight percent of the at least

one imidazoline, and about 0.95 weight percent of the at least one molybdate salt, with the balance made up to 100 by solvent.

According to a second aspect of the invention there is provided a method of treating a gas well, the method comprising the step of introducing into the gas well an aqueous mixture comprising an effective amount of the composition of the first aspect.

Natural gas wells typically begin to fill with water as the gas within them is extracted, resulting in a lowering of efficiency in gas extraction. One method known in the art to remove this liquid is to inject a foaming agent, or surfactant, into the well, which then creates a foam with the liquid within the well. Foams can be more efficiently removed from a gas well than a liquid, and therefore, the liquid within the well may be removed at a lower energy cost with the use of a foaming agent than without a foaming agent.

In addition, components of a gas well are typically made from alloys such as mild steels. These alloys may suffer from corrosion during normal use of the gas well, and therefore, corrosion inhibitors are often added to the well to minimise such corrosion so that those alloy components do not need to be regularly repaired or replaced.

Typically, foaming agents and corrosion inhibitors comprise chloride ions resulting from the manufacture process for these agents. When foaming agents and corrosion inhibitor composition concentrations are increased, the chloride concentration also increases, and can reach levels where these compositions themselves begin to be corrosive due to the high concentration of chloride.

The inventors have found that the present method may allow liquid within a gas well to be foamed and subsequently removed from the gas well in an energy efficient way, and help prevent corrosion of the metallic components of the gas well, that might otherwise be corroded in the conditions within the gas well, without substantially corroding the injector and flow lines used to introduce the composition into the gas well.

The aqueous mixture may be introduced into the gas well via a chemical injection line.

The chemical injection line may be metallic. For example, the chemical injection line may comprise a mild steel, such as C1018, or 9Cr-1Mo. The method of the invention may prevent or substantially prevent corrosion of the flow lines.

The aqueous mixture may be introduced into the gas well continuously. For example, the aqueous mixture may be introduced into the gas well at a flow rate of between 1-1000L/hour.

The method may further comprise the step of removing a liquid from the gas well in the form of a foam, wherein the foam has been formed by the liquid in the gas well and the composition. Accordingly, the composition according to the first aspect may lower the surface tension of the gas/liquid interface within the gas well, thereby stabilising a foam formed by the liquid.

Embodiments of the present invention will now be described, by way of non-limiting example, with reference to the accompanying drawings.

**Brief Description of the Figures**

Figure 1 shows two 9Cr-1 Mo coupons after 2 months exposure to a composition according to one embodiment of the invention;

Figure 2 shows two Alloy 625 coupons after 2 months exposure to a composition according to one embodiment of the invention;

Figure 3 shows two C1018 coupons after 2 months exposure to a composition according to one embodiment of the invention; and

Figure 4 shows two C1018 coupons after 14 days exposure to produced water from a Danish oil well.

**Specific Description of Embodiments of the Invention**

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

A concentrated composition according to an embodiment of the invention, composition A, was produced and the proportions of the components of the composition are shown in Table 1.

**Table 1: The components of Composition A**

| **Chemical Name** | **Trade Name** | CAS number | **Weight percent** |
|---|---|---|---|
| Laurylamidopropylbetaine | Ultra LC-CT | 4292-10-8 | 57 |
| N-propyl-2-heptadecenyl imidazoline acrylate | PR-4758 | 61790-12-3 | 5 |
| Ethylene Glycol | n/a | 107-21-1 | 36.1 |
| Sodium molybdate dihydrate | n/a | 10102-40-6 | 0.95 |
| Water | n/a | 7789-20-0 | 0.95 |

Laurylamidopropylbetaine was provided as a 35% active agent in water.

The composition had a chloride composition of less than 200 mg/L (or 200ppm). The laurylamidopropylbetaine is typically provided with a much higher chloride concentration, but the inventors worked with the suppliers to provide the betaine component with a chloride concentration of less than 500 mg/L (or 500ppm), which resulted in the required low chloride concentration for the composition.

The composition was tested to determine its foaming and corrosion inhibitory efficacy using the following test procedures.

**Foam Performance Testing**

Foam generation over time was tested against two different salinity brines (high salt and low salt brines) with 5000ppm concentration product (composition A) using a modified version of the standard method ASTM D-892.

The high salt brine contains a high concentration of salt (170g/L NaCl) and the low salt brine contains a low concentration of salt (1.5g/L NaCl).

Modified ASTM D-892 Test

A modified ASTM D-892 test was used to determine the efficacy of the composition as a foaming agent.

The required amount of brine and the composition A was measured out into a 200-mL bottle such that the total amount of fluid to be tested was 200 mL and the concentration of composition A was 5000ppm. The liquid within the bottle was agitated to mix the brine and composition A together. The mixture was then transferred to a 1000mL cylinder comprising a gas sparger. Gas was passed from a gas source through the fluid via the sparger and the height of the foam so produced and the height of the un-foamed liquid was recorded at regular time intervals.

At the end of 3 min, or until the foam reached 1000mL, whichever happened first, the flow of gas was stopped and the foam half-life was determined.

Results

The results are shown below in Table 2

Table 2

| **Water Source** | **High Salt Brine** | **Low Salt Brine** |
|---|---|---|
| **Time (s)** | **Foam Height (mL)** | |
| 15 | 670 | 650 |
| 30 | 900 | 850 |
| 40 | **1000+** | 1000 |
| Time to 1000mL foam (s) | 35 | 45 |
| Half-Life (s) | 55 | 35 |

"1000+" indicates that the foam had reached 1000mL before this time point, and therefore, could not be measured further.

Therefore, it has been shown that the composition forms a stable foam in both high and low salinity brines.

## Corrosion Inhibition Testing

Corrosion of pattern 44 C1018 electrodes mounted on a PEEK LPR probes by the composition was measured for a variety of conditions using the SGS Type 3 LPR test.

### LPR Bubble Test

A glass corrosion testing cell was used where $CO_2$ was sparged through the test solution continuously, before exiting the cell. Therefore, the $CO_2$ partial pressure, which is one of the main factors which drives the severity of the corrosion in the test, was set at a maximum of one bar.

### LPR Autoclave Test

A closed testing cell was used and was charged with a certain pressure of $CO_2$, allowing higher pressures of $CO_2$ to be used, simulating more corrosive conditions.

For each test, test cells were charged with a brine/condensate (hydrocarbon) mixture and sealed. The test cell was heated to the test temperature and the stirrer set to a stirring rate of 100rpm. The test cell was then purged with $CO_2$ for an hour, before the probe electrode was installed. The test cell was connected to form a circuit and corrosion rate measurements were taken using an ACM potentiostat.

After pre-corrosion, the contents of the test cell were replaced by fresh brine/condensate mixture. The dose of the composition to be tested was added by syringe into the test cell. The test vessel was then heated to the test temperature and the pressure of $CO_2$ adjusted, whilst maintaining a constant $CO_2$ purge throughout the test (Bubble test).

Summary of corrosion rates using SGS Type III LPR test, 90:10 brine:condensate, 70°C, 0.69 bar $ppCO_2$, stirring at 1000rpm are shown in Table 3.

Table 3

| Product | Dose (ppm) | Initial corrosion rate (mm/yr) | Final corrosion rate (mm/yr) | Inhibition percentage (%) |
|---|---|---|---|---|
| Composition A | 2500 | 1.41 | 0.03 | 97.85 |
| | | 1.05 | 0.03 | 97.48 |

Summary of corrosion rates using SGS Type III autoclave test, 90:10 brine:condensate, 50°C, 3 bar $ppCO_2$, stirring at 1000rpm are shown in Table 4.

Table 4

| Product | Dose (ppm) | Initial corrosion rate (mm/yr) | Final corrosion rate (mm/yr) | Inhibition percentage (%) |
|---|---|---|---|---|
| Composition A | 2500 | 3.48 | 0.14 | 95.95 |
| | 5000 | 4.16 | 0.11 | 97.24 |

In order to test whether the composition was able to inhibit corrosion during fluid flow, a Rotating Coupon Autoclave (RCA) Test was performed. In this method the test coupons were rotated within an autoclave containing the test fluids. This induces a shear stress on the surface of the coupons and therefore simulates liquid flow. A summary of corrosion rates using 150 hour RCA test with 90:10 brine:condensate at 80°C, 1 bar $ppCO_2$, rotating at 829rpm, generating 50 Pa of shear stress, are shown in Table 5.

Table 5:

| Product | Dose (ppm) | Initial Weight (g) | Final Weight (g) | Final corrosion rate (mm/yr) | Average corrosion rate (mm/yr) |
|---|---|---|---|---|---|
| Composition A | 2500 | 38.6401 | 38.5881 | 0.09 | 0.09 |
| | | 38.5788 | 38.5262 | 0.09 | 0.09 |
| | | 38.5298 | 38.4773 | 0.09 | 0.09 |
| | | 38.7232 | 38.6713 | 0.09 | 0.09 |

Therefore, the composition has been shown to inhibit corrosion in the conditions that may be expected to be found in gas wells.

**Material Compatibility Testing**

The compatibility of the composition was tested with alloys that are commonly found within injector lines or feed lines in gas wells. Specifically, the rate of corrosion of three alloys when exposed to composition A was tested, and the results were compared to the rate of corrosion in the presence of produced water. "Produced water" is the water extracted from oil or gas wells, and typically comprises a high chloride concentration.

The alloys tested were C1018, a mild steel predominantly comprising 98.81-99.26% iron, 0.18% carbon, and 0.6-0.9% manganese, Alloy 625, predominantly comprising nickel, chromium, iron, molybdenum and niobium, and 9Cr-1 Mo, a martensitic steel comprising iron, chromium (9%) and molybdenum (1%).

*Test Procedure*

Each test coupon was prepared by rinsing with acetone to degrease, allowed to dry thoroughly, and weighed (to 4 decimal places). Each coupon was then submerged completely in test solution, ensuring the maximum of vapour space above the solution in the test cell.

Each test cell was heated to the test temperature in an oven. After the required test duration the cells were removed and allowed, if necessary, to cool to room temperature before specimen cleaning was performed.

Before the specimens were cleaned, their appearance was observed and recorded. Photographs of test coupons after exposure to the test solutions are shown in Figures 1-4.

The coupons were rinsed with water in order to remove any traces of the organic solvent and its associated contaminants before being lightly scrubbed with a brass bristled brush or sponge with water. The coupons were then rinsed with water, followed by acetone and allowed to dry thoroughly. The coupons were weighed and examined, recording details of surface condition, before being photographed.

The general corrosion rate is calculated using the following equation:

$$\text{Corrosion rate (mpy)} = (3.45 \times 10^6 \times W) / (A \times T \times D)$$

Where: W = weight loss (g)
D = density (g/cm$^3$)
A = specimen area (cm$^2$)
T = exposure time (hours)

The results of the tests are shown in Table 6 below.

Table 6

| Material | Test Solution | Temperature (°C) | Corrosion rate (mm/yr) | Appearance |
|---|---|---|---|---|
| C1018 | Produced Water | 65 | 0.0433 | Clear evidence of corrosion |
| C1018 | | 65 | 0.0514 | Clear evidence of corrosion |

(continued)

| Material | Test Solution | Temperature (°C) | Corrosion rate (mm/yr) | Appearance |
|---|---|---|---|---|
| C1018 | Composition A | 50 | 0.0176 | Evidence of very light general corrosion |
| C1018 | | 50 | 0.0076 | Evidence of very light general corrosion |
| Alloy 625 | | 130 | 0.0038 | No evidence of corrosion |
| Alloy 625 | | 130 | 0.0007 | No evidence of corrosion |
| 9Cr-1 Mo | | 50 | 0.0058 | No evidence of corrosion |
| 9Cr-1 Mo | | 50 | 0.0045 | No evidence of corrosion |

Corrosion rates where the test solution is produced water were calculated after 14 days of exposure of the coupon to the test solution. Corrosion rates where the test solution is composition A were calculated after 2 months of exposure of the coupon to the test solution.

C1018 coupons suffered a much greater rate of corrosion when exposed to produced water, rather than when exposed to composition A, and Alloy 625 and 9Cr-1 Mo coupons showed no sign of corrosion after two months of exposure to composition A.

Accordingly, the composition has been shown to clearly inhibit corrosion of alloys typically found in natural gas well injector or flow line components.

Therefore, the composition of the invention is an effective foaming agent, an effective corrosion inhibitor and does not substantially corrode the alloys typically found within gas well injector and flow lines, even in a concentrated form.

Field Trial testing

The composition of the invention has been tested in field trials in gas wells over a period of several days. The field trials confirmed that the rate of production of the gas well was maintained using the composition of the invention when compared to foaming compositions known in the art, whilst also providing corrosion inhibition within the well itself.

Furthermore, the field trial confirmed that the rate of production of the well can be maintained with a lower concentration of the composition than foaming compositions known in the art.

Accordingly, the composition has been shown to provide corrosion inhibition without any reduction in the foaming performance within a gas well.

The person skilled in the art will appreciate that the present example composition is not limiting and that variations of the composition are included within the scope of the present invention.

## Claims

1. A composition comprising at least one betaine, at least one imidazoline, and at least one molybdate salt, wherein the composition has a chloride concentration of less than 2000ppm, wherein the at least one betaine has the general formula (1)

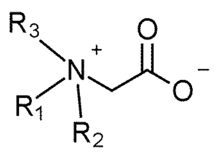

(1)

where $R_1$, $R_2$ are individually $C_1$-$C_3$ alkyl; and
$R_3$ has general formula (2)

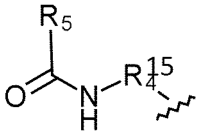

(2)

where $R_4$ is $C_1$-$C_5$ saturated hydrocarbon; and
$R_5$ is $C_1$-$C_{32}$ alkyl, and
wherein the at least one imidazoline has general formula (3)

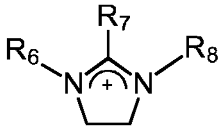

(3)

where $R_6$ is $C_2$-$C_8$ alkyl;
$R_7$ is a fatty acid derivative; and
$R_8$ is an unsaturated acid derivative.

2. A composition according to claim 1, wherein the composition has a chloride concentration of less than 500ppm.

3. A composition according to claim 1, wherein $R_4$ is $C_3$ saturated hydrocarbon (propyl), and the at least one betaine is an alkylamidopropyl betaine.

4. A composition according to either one of claim 1 or claim 3, wherein $R_1$ and $R_2$ are methyl, $R_4$ is propyl, and $R_5$ is $C_8$-$C_{18}$ alkyl.

5. A composition according to claim 1, wherein $R_6$ is propyl.

6. A composition according to either one of claim 1 or claim 5, wherein $R_7$ is $C_{13}$-$C_{20}$ aliphatic carboxylic acid derivative.

7. A composition according to any one preceding claim , wherein $R_8$ is an acrylic acid derivative.

8. A composition according to any one preceding claim, wherein the at least one imidazoline is selected from the group consisting of N-propyl-2-heptadecenyl imidazoline acrylate, N-butyl-2-heptadecenyl imidazoline acrylate and N-hexyl-2-heptadecenyl imidazoline acrylate.

9. A composition according to any one preceding claim, wherein the composition comprises about 1 to about 99 weight percent of the at least one betaine, about 1 to about 20 weight percent of the at least one imidazoline, and about 0.1 to about 5.0 weight percent of the at least one molybdate salt, with the balance made up to 100 by solvent.

10. A method of treating a gas well, the method comprising the step of introducing into the gas well an aqueous mixture comprising an effective amount of the composition according to any one preceding claim.

11. A method according to claim 10, wherein the aqueous mixture is introduced into the gas well via a chemical injection line, and wherein the chemical injection line is metallic and the composition substantially prevents corrosion on the chemical injection line.

12. A method according to either one of claim 10 or claim 11 further comprising the step of removing a liquid from the gas well in the form of a foam, wherein the foam has been formed by the liquid in the gas well and the composition.

13. A method according to any one of claim 10 to claim 12, wherein the composition inhibits corrosion within the well once introduced into the gas well.

**Patentansprüche**

1. Zusammensetzung, die mindestens ein Betain, mindestens ein Imidazolin und mindestens ein Molybdatsalz umfasst, wobei die Zusammensetzung eine Chloridkonzentration von weniger als 2000 ppm aufweist, wobei das mindestens eine Betain die allgemeine Formel (1)

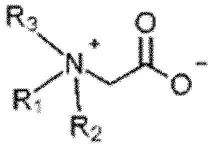

(1) aufweist,

wobei $R_1$, $R_2$ einzeln $C_1$-$C_3$-Alkyl sind; und
$R_3$ die allgemeine Formel (2)

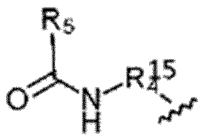

(2) aufweist,

wobei $R_4$ gesättigter $C_1$-$C_5$-Kohlenwasserstoff ist; und
$R_5$ $C_1$-$C_{32}$-Alkyl ist und
wobei das mindestens eine Imidazolin die allgemeine Formel (3)

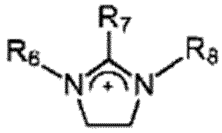

(3) aufweist,

wobei $R_6$ $C_2$-$C_8$-Alkyl ist;
$R_7$ ein Fettsäurederivat ist; und
$R_8$ ein ungesättigtes Säurederivat ist.

2. Zusammensetzung nach Anspruch 1, wobei die Zusammensetzung eine Chloridkonzentration von weniger als 500 ppm aufweist.

3. Zusammensetzung nach Anspruch 1, wobei $R_4$ gesättigter $C_3$-Kohlenwasserstoff (Propyl) ist und das mindestens eine Betain ein Alkylamidopropylbetain ist.

4. Zusammensetzung nach einem der Ansprüche 1 oder 3, wobei $R_1$ und $R_2$ Methyl sind, $R_4$ Propyl ist und $R_5$ $C_8$-$C_{18}$-Alkyl ist.

5. Zusammensetzung nach Anspruch 1, wobei $R_6$ Propyl ist.

6. Zusammensetzung nach einem der Ansprüche 1 oder 5, wobei $R_7$ $C_{13}$-$C_{20}$ aliphatisches Carbonsäurederivat ist.

7. Zusammensetzung nach einem der vorhergehenden Ansprüche, wobei $R_8$ ein Acrylsäurederivat ist.

8. Zusammensetzung nach einem der vorhergehenden Ansprüche, wobei mindestens ein Imidazolin aus der Gruppe bestehend aus N-Propyl-2-heptadecenylimidazolinacrylat, N-Butyl-2-heptadecenylimidazolinacrylat und N-Hexyl-2-heptadecenylimidazolinacrylat ausgewählt ist.

9. Zusammensetzung nach einem der vorhergehenden Ansprüche, wobei die Zusammensetzung etwa 1 bis etwa 99 Gewichtsprozent des mindestens einen Betains, etwa 1 bis etwa 20 Gewichtsprozent des mindestens einen Imidazolins und etwa 0,1 bis etwa 5,0 Gewichtsprozent des mindestens einen Molybdatsalzes umfasst, wobei der Rest durch Lösungsmittel auf 100 aufgefüllt wird.

**10.** Verfahren zur Behandlung eines Erdgasbohrlochs, wobei das Verfahren den Schritt des Einleitens eines wässrigen Gemischs in das Erdgasbohrloch umfasst, das eine wirksame Menge der Zusammensetzung nach einem der vorhergehenden Ansprüche umfasst.

**11.** Verfahren nach Anspruch 10, wobei das wässrige Gemisch über eine Chemikalieninjektionsleitung in das Erdgasbohrloch eingeleitet wird und wobei die Chemikalieninjektionsleitung metallisch ist und die Zusammensetzung Korrosion an der Chemikalieninjektionsleitung im Wesentlichen verhindert.

**12.** Verfahren nach einem der beiden Ansprüche 10 oder 11, ferner umfassend den Schritt des Entfernens einer Flüssigkeit aus dem Erdgasbohrloch in Form eines Schaums, wobei der Schaum durch die Flüssigkeit in dem Erdgasbohrloch und die Zusammensetzung gebildet worden ist.

**13.** Verfahren nach einem der Ansprüche 10 bis 12, wobei die Zusammensetzung die Korrosion innerhalb des Bohrlochs hemmt, sobald sie in das Erdgasbohrloch eingeleitet wurde.

## Revendications

**1.** Composition comprenant au moins une bétaïne, au moins une imidazoline et au moins un sel de molybdate, la composition ayant une concentration en chlorure inférieure à 2 000 ppm, l'au moins une bétaïne ayant la formule générale (1)

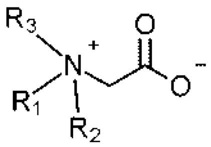

(1)

Où $R_1$, $R_2$ sont individuellement un alkyle en $C_1$ à $C_3$; et
$R_3$ a la formule générale (2)

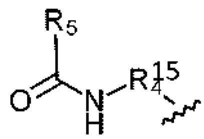

(2)

Où $R_4$ est un hydrocarbure saturé en $C_1$ à $C_5$; et
$R_5$ est un alkyle en $C_1$ à $C_{32}$ et
dans laquelle l'au moins une imidazoline a la formule générale (3)

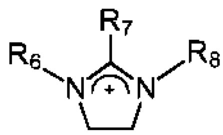

(3)

Où $R_6$ est un alkyle en $C_2$ à $C_8$;
$R_7$ est un dérivé d'acide gras ; et
$R_8$ est un dérivé d'acide insaturé.

**2.** Composition selon la revendication 1, dans laquelle la composition a une concentration en chlorure inférieure à 500 ppm.

**3.** Composition selon la revendication 1, dans laquelle $R_4$ est un hydrocarbure saturé (propyle) en $C_3$ et l'au moins une bétaïne est une bétaïne alkylamidopropyl.

**4.** Composition selon l'une quelconque de la revendications 1 ou revendication 3, dans laquelle $R_1$ et $R_2$ sont un méthyle, $R_4$ est un propyle, et $R_5$ est un alkyle en $C_8$ à $C_{18}$.

**5.** Composition selon la revendication 1, dans lequel $R_6$ est un propyle.

**6.** Composition selon l'une quelconque de la revendication 1 ou revendication 5, dans laquelle $R_7$ est un dérivé d'acide carboxylique aliphatique en $C_{13}$ à $C_{20}$.

**7.** Composition selon l'une quelconque des revendications précédentes, dans laquelle $R_8$ est un dérivé d'acide acrylique.

**8.** Composition selon l'une quelconque des revendications précédentes, dans laquelle l'au moins une imidazoline est choisie parmi le groupe constitué de N-propyl-2-heptadécényle imidazoline acrylate, N-butyl-2-heptadécényle imidazoline acrylate et N-hexyl-2-heptadécényle imidazoline acrylate.

**9.** Composition selon l'une quelconque des revendications précédentes, dans laquelle la composition comprend environ 1 à environ 99 pour cent en poids de l'au moins une bétaïne, environ 1 à environ 20 pour cent en poids de l'au moins une imidazoline, et environ 0,1 à environ 5,0 pour cent en poids de l'au moins un sel de molybdate, le complément étant porté à 100 par un solvant.

**10.** Procédé de traitement d'un puits de gaz, le procédé comprenant l'étape d'introduction dans le puits de gaz d'un mélange aqueux comprenant une quantité efficace de la composition selon l'une quelconque des revendications précédentes.

**11.** Procédé selon la revendication 10, dans lequel le mélange aqueux est introduit dans le puits de gaz par l'intermédiaire d'une conduite d'injection de produits chimiques, et dans lequel la conduite d'injection de produits chimique est métallique et la composition empêche sensiblement la corrosion sur la conduite d'injection de produits chimique.

**12.** Procédé selon l'une quelconque de la revendications 10 ou revendication 11, comprenant en outre l'étape d'élimination d'un liquide du puits de gaz sous la forme d'une mousse, la mousse ayant été formée par le liquide dans le puits de gaz et la composition.

**13.** Procédé selon l'une quelconque de la revendications 10 à la revendication 12, dans lequel la composition inhibe la corrosion à l'intérieur du puits une fois introduite dans le puits de gaz.

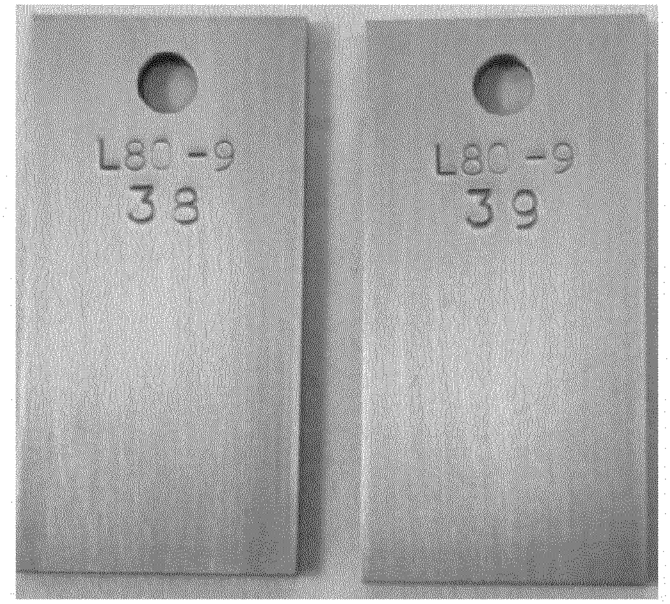


Figure 1

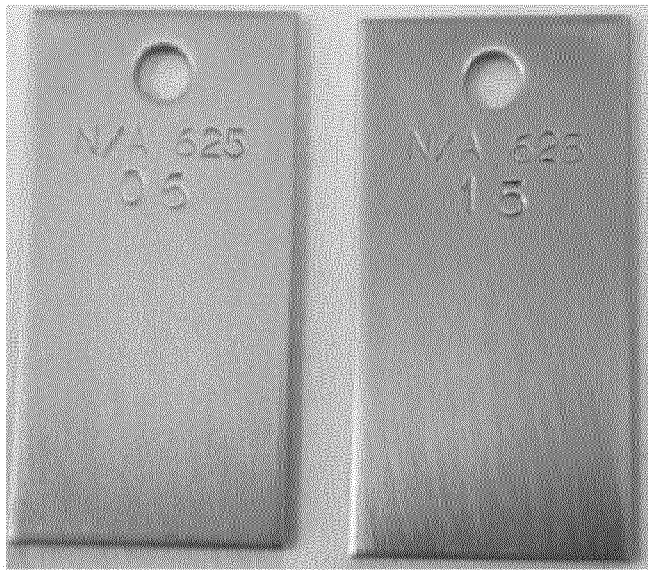


Figure 2

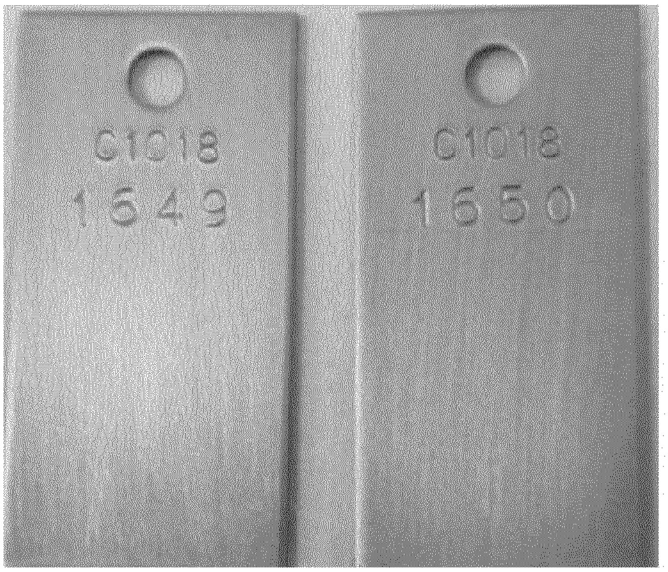


Figure 3

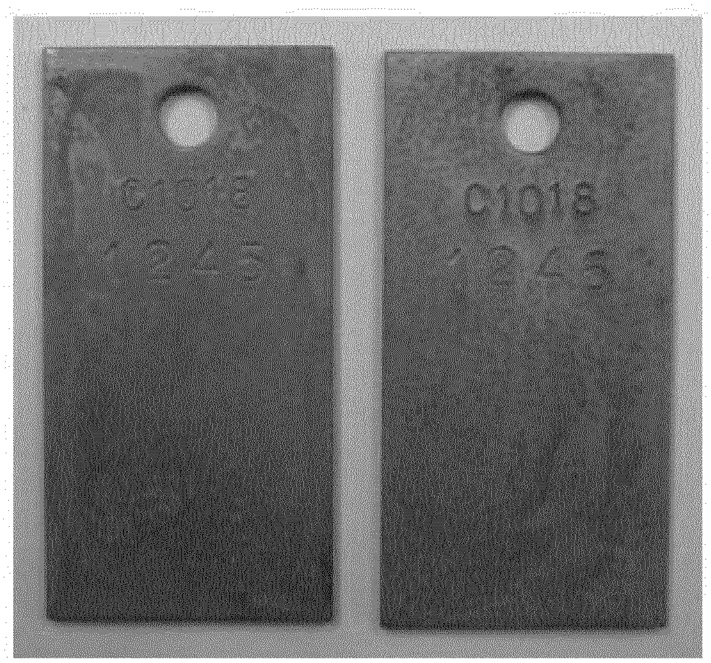


Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009064719 A
- CN 103614129
- CN 103881697
- CN 103409122
- US 20040200996 A


### Non-patent literature cited in the description


- *CHEMICAL ABSTRACTS,* 61790-12-3
- *CHEMICAL ABSTRACTS,* 4292-10-8, 61790-12-3, 107-21-1, 10102-40-6, 7789-20-0